# FASCICULE DE BREVET EUROPEEN

(11) **EP 2 195 240 B1**
(45) Date de publication et mention de la délivrance du brevet: **27.06.2012**
(21) Numéro de dépôt: 08829095.2
(22) Date de dépôt: 20.08.2008
(51) Int. Cl.: B64D 31/00, B64D 43/00, F02C 9/00

(54) **ARCHITECTURE REPARTIE ENTRE UN FADEC ET DES COMPOSANTS AVIONIQUES**
VERTEILTE ARCHITEKTUR FÜR FADEC- UND LUFTFAHRTKOMPONENTEN
FADEC AND AVIONIC COMPONENT DISTRIBUTED ARCHITECTURE

(30) Priorité: 03.09.2007 FR 0757333
(43) Date de publication de la demande: 16.06.2010
(73) Titulaire: AIRBUS OPERATIONS, 31060 Toulouse (FR)
(72) Inventeur: SAINT MARC, Laurent, F-47600 Nerac (FR); BRUNEL, Luc, F-31100 Toulouse (FR); ZACCARIA, Patrick, F-31300 Toulouse (FR); ALEXANDRE, Matthieu, 8000 Aarhus (DK); FEAU, Julien, F-31000 Toulouse (FR); LEBORGNE, Frédéric, F-31000 Toulouse (FR); IMMORDINO, Thierry, F-31450 Montgiscard (FR); BELKADI, Jean-François, F-31000 Toulouse (FR); DURAND, Nathalie, 1701 Fribourg (CH)
(74) Mandataire: Imbert de Tremiolles, Ghislain
(86) Numéro de dépôt international: PCT/FR2008/051512
(87) Numéro de publication internationale: WO 2009/030856

(56) Documents cités:
- EP-A- 0 807 897
- WO-A-96/41260
- GB-A- 2 427 711
- US-A- 5 270 931

## Description

La présente invention concerne les systèmes avioniques et plus particulièrement une architecture selon laquelle les fonctions d'un FADEC sont réparties entre le FADEC lui-même et des composants avioniques.

Les équipements électroniques et les systèmes avioniques embarqués actuels sont de plus en plus complexes et de plus en plus performants, intégrant de nombreuses fonctionnalités avancées et multipliant les interconnexions entre les systèmes.

Ces systèmes avioniques embarqués hautement intégrés, basés sur des composants matériels, des composants logiciels et un réseau de communication partagé, se multiplient et se complexifient au rythme d'une évolution technologique permanente, ouvrant de nouvelles perspectives pour les avionneurs. Cependant, l'avènement de ces nouvelles technologies, de ces nouveaux concepts et de ces nouveaux systèmes avioniques entraîne des délais d'étude et de développement ainsi que des coûts de développement, d'intégration et de maintenance élevés.

En particulier, on peut distinguer les systèmes avioniques des systèmes de contrôle des moteurs appelés FADECs (acronyme de *Full Authority Digital Engine Control* en terminologie anglo-saxonne). Ces systèmes, bien qu'ayant des fonctions différentes et qu'étant généralement développés par des sociétés différentes, sont reliés par des moyens de communication complexes qui ont notamment pour objet le contrôle et la surveillance des moteurs.

Un FADEC est associé à chaque moteur. Il est souvent situé dans un compartiment de la soufflante des réacteurs. Il comprend généralement deux canaux distincts pour former une redondance fonctionnelle. Un FADEC intègre un module électronique de contrôle par canal, des programmes associés à ces modules, des capteurs et le câblage nécessaire.

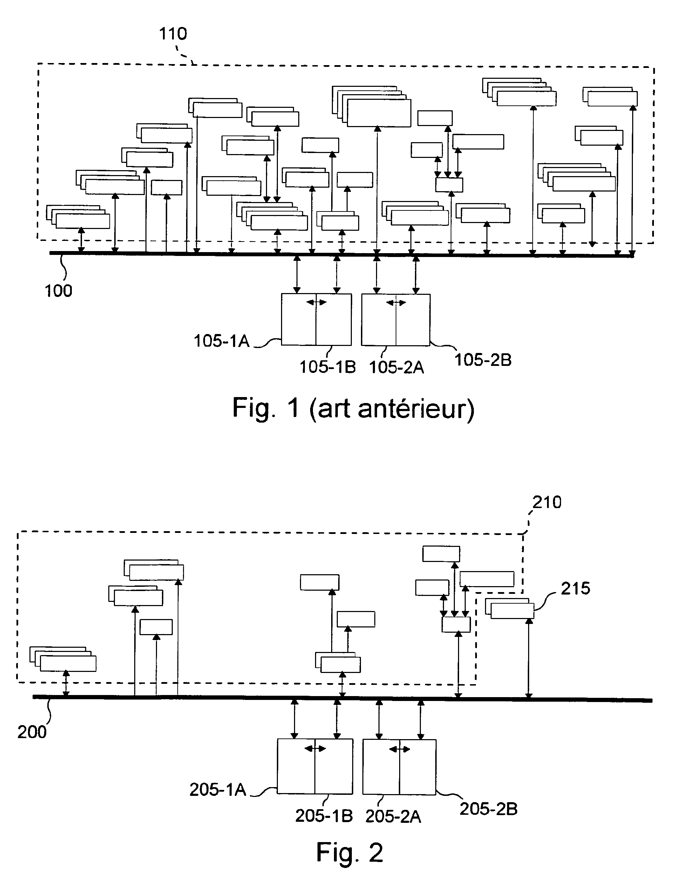

La figure 1 illustre un exemple de connexion 100 entre les FADECs d'un aéronef comprenant deux moteurs et les composants avioniques. La connexion est ici réalisée par un réseau de communication. Deux FADECs 105-1 et 105-2 comprenant chacun deux canaux A et B sont utilisés. Le FADEC 105-1 est le FADEC associé au premier moteur tandis que le FADEC 105-2 est le FADEC associé au second moteur. L'ensemble des composants avioniques échangeant des données avec les FADECs a ici la référence 110.

A titre d'illustration, le brevet EP 0 807 897 concerne la transmission automatique d'une valeur de poussée d'un moteur à destination d'un système d'ordinateur d'avionique pour permettre de configurer ce dernier en conséquence. Après avoir déterminé l'identifiant représentant la valeur de la poussée du moteur en lisant la configuration de l'ensemble des broches du moteur associé, cet identifiant est transmis, sous forme numérique, à destination de l'ordinateur de gestion de vol/poussée où il est stocké pour pouvoir être traité. De même, le brevet US 5,270,931 décrit un système de configuration d'un circuit électronique d'aéronef.

Il est généralement possible de monter plusieurs types de moteurs sur un aéronef, le choix étant déterminé, par exemple, selon les besoins des compagnies aériennes. Il est alors nécessaire d'adapter les systèmes avioniques aux différents systèmes de contrôle des moteurs pouvant être utilisés ou de concevoir des systèmes avioniques adaptés à plusieurs types de systèmes de contrôle des moteurs. Il est aussi nécessaire de concevoir le système de contrôle moteur pour chaque nouvelle motorisation.

L'invention permet de résoudre au moins un des problèmes exposés précédemment et notamment de simplifier l'interface entre FADECs et composants avioniques, de réduire les coûts et les délais de développement des FADECs, d'améliorer la maturité des systèmes électroniques, de standardiser certaines des fonctions du FADEC aux différentes motorisations d'un aéronef et d'accroître l'indépendance entre les cycles de conception des avionneurs et ceux des motoristes.

L'invention a ainsi pour objet un dispositif pour aéronef motorisé comprenant au moins un composant avionique positionné dans ledit aéronef et au moins un contrôleur moteur positionné dans ou à proximité d'un moteur dudit aéronef, ce dispositif comprenant en outre au moins une interface moteur positionnée dans ledit aéronef, ladite au moins une interface moteur étant adaptée à échanger des données entre ledit au moins un composant avionique et ledit au moins un contrôleur moteur, ladite au moins une interface moteur étant générique et adaptée à communiquer avec des contrôleurs moteur de différents types pouvant être montés sur ledit aéronef, ledit au moins un contrôleur moteur étant spécifique à un type de moteur.

Le dispositif selon l'invention permet ainsi de limiter les contraintes entre les avionneurs et les motoristes afin d'optimiser, notamment, les temps et les coûts de développement et de maintenance.

Selon un mode de réalisation particulier, ladite au moins une interface moteur comprend des moyens pour sélectionner et valider lesdites données échangées entre ledit au moins un composant avionique et ledit au moins un contrôleur moteur afin de centraliser les fonctions de transfert de données entre ledit au moins un composant avionique et ledit au moins un contrôleur moteur.

Toujours selon un mode de réalisation particulier, ladite au moins une interface moteur comprend des moyens pour valider au moins certaines desdites données échangées entre ledit au moins un composant avionique et ledit au moins un contrôleur moteur afin de centraliser les fonctions de validation de données entre ledit au moins un composant avionique et ledit au moins un contrôleur moteur.

Selon un mode de réalisation particulier, ladite au moins une interface moteur est au moins partiellement implémentée dans un calculateur de type LRU et/ou dans un calculateur avionique modulaire de type IMA.

Ladite au moins une interface moteur comprend, de préférence, au moins deux canaux permettant d'assurer la redondance des fonctions critiques pour augmenter la fiabilité de l'aéronef. De même, ledit au moins un contrôleur moteur comprend, de préférence, au moins deux canaux redondants pour augmenter la fiabilité de l'aéronef.

Selon un mode de réalisation particulier, ledit aéronef comprend au moins deux moteurs, au moins une interface moteur et au moins un contrôleur moteur étant respectivement associés à chacun desdits au moins deux moteurs, ledit aéronef comprend en outre des moyens de ségrégation des données échangées dans chacun des systèmes formés d'au moins une interface moteur et d'au moins un contrôleur moteur associé à chacun desdits au moins deux moteurs.

Toujours selon un mode de réalisation particulier, le dispositif comprend en outre des moyens de connexion directe entre au moins un élément de commande dudit aéronef et au moins un contrôleur moteur pour accroître la fiabilité de l'aéronef.

D'autres avantages, buts et caractéristiques de la présente invention ressortent de la description détaillée qui suit, faite à titre d'exemple non limitatif, au regard des dessins annexés dans lesquels :
- la figure 1 représente schématiquement un exemple d'interface standard entre le système de contrôle de la propulsion et les autres systèmes avioniques d'un aéronef ;
- la figure 2 représente schématiquement un exemple d'interface selon l'invention entre le système de contrôle de la propulsion d'un aéronef comprenant deux moteurs et les autres systèmes avioniques de l'aéronef ;
- la figure 3 illustre un premier exemple d'architecture physique adaptée à mettre en oeuvre l'invention ; et,
- la figure 4 présente un second exemple d'architecture adaptée à mettre en oeuvre l'invention dans laquelle un lien direct est établi entre les commandes de gaz et les unités de contrôle moteur.

Le procédé selon l'invention permet de répartir les fonctions traditionnellement mises en oeuvre dans les FADECs entre les composants avioniques et les FADECs pour simplifier les FADECs et leurs logiciels. Ce procédé permet de centraliser les échanges de données avioniques entre les FADECs et les composants avioniques.

En particulier, l'invention a pour objet de déplacer les fonctions d'alimentation électrique, de transmission des données avioniques aux FADECs et de transmission des données liées aux moteurs aux composants avioniques ainsi que les fonctions liées à l'inversion de poussée des FADECs vers les composants avioniques.

Un FADEC est en principe composé des deux éléments suivants,
- une unité de contrôle moteur, aussi appelé ECU (acronyme de Engine Control Unit en terminologie anglo-saxonne), ou un contrôleur électronique moteur, aussi appelé EEC (Electronic Engine Control en terminologie anglo-saxonne). Dans la suite de la description, cet élément est appelé génériquement un contrôleur moteur ; et,
- un dispositif associé d'entrée/sortie comprenant notamment des connecteurs, une alimentation électrique, une interface avec les actionneurs et une interface avec les capteurs.

Les fonctions de chaque FADEC sont principalement les suivantes,
- allumage, démarrage et arrêt du moteur ;
- contrôle de poussée ;
- contrôle des sorties du FADEC ;
- contrôle des inverseurs de poussée ;
- détection des dysfonctionnements de poussée ;
- contrôle de préchauffage ;
- contrôle anti-givrage de la nacelle ;
- contrôle de dépressurisation des pompes hydrauliques ;
- détection, isolation, gestion et indication des erreurs ;
- équilibrage des vibrations ;
- contrôle des entrées du FADEC ;
- identification des logiciels du FADEC ; et,
- re-programmation du FADEC.

Selon l'invention, les fonctions des FADECs de l'art antérieur sont scindées en deux sous-systèmes, ces deux sous-systèmes étant les suivants,
- l'unité d'interface moteur, aussi appelée EIU *(Engine Interface Unit* en terminologie anglo-saxonne), localisée dans l'aéronef, qui a pour fonction d'acquérir des données de différentes sources. L'unité d'interface moteur est générique pour les différents types de moteurs pouvant être montés sur l'aéronef. L'unité d'interface moteur comprend les fonctions d'intégration moteur, appelées EIF *(Engine Integration Function* en terminologie anglo-saxonne), telles que la redondance et la vérification de la consistance des données.
- le contrôleur moteur, localisée dans le moteur, qui a pour fonction de contrôler et de surveiller le moteur. Le contrôleur moteur est spécifique à chaque moteur.

Toutes les données nécessaires issues des composants avioniques convergent vers l'unité d'interface moteur avant d'être transmises aux contrôleurs moteur. De même, certaines données issues des FADECs convergent vers l'unité d'interface moteur avant d'être transmises aux composants avioniques.

Les fonctions de l'unité d'interface moteur et du contrôleur moteur peuvent être implémentées dans un ou plusieurs calculateurs.

Selon un mode de réalisation particulier, un développement spécifique peut être effectué pour implémenter ces fonctions dans des calculateurs de type LRU *(Line Replaceable Unit* en terminologie anglo-saxonne).

Alternativement, selon un autre mode de réalisation, ces fonctions peuvent être implémentées dans des calculateurs avioniques modulaires, par exemple de type IMA (acronyme de *Integrated Modular Avionics* en terminologie anglo-saxonne), dans un ou plusieurs modules du type CPIOM *(Core Processing Input*/*Output Module* en terminologie anglo-saxonne).

Selon une autre alternative, une partie de ces fonctions est implémentée dans des calculateurs de type LRU tandis qu'une autre partie est implémentée dans des calculateurs avioniques modulaires de type IMA.

Le tableau suivant présente une synthèse de différentes implémentations possibles,

| | **Fonctions d'interface moteur** | **Fonctions spécifiques moteur** |
|---|---|---|
| **Art antérieur** (un LRU unique) | LRU dans le moteur | LRU dans le moteur |
| **LRU** (deux LRU différents) | LRU dans l'aéronef | LRU dans le moteur |
| **LRU** (deux LRU différents) | LRU dans l'aéronef | LRU dans l'aéronef |
| **LRU et IMA** | IMA dans l'aéronef | LRU dans le moteur |
| **LRU et IMA** | IMA dans l'aéronef | LRU dans l'aéronef |
| **IMA** (seul) | IMA dans l'aéronef | IMA dans l'aéronef |

La figure 2 illustre un exemple de connexion physique selon l'invention entre les FADECs d'un aéronef comprenant deux moteurs et les composants avioniques. Comme dans l'exemple donné à la figure 1, la connexion 200 est réalisée par un réseau de communication. De même, deux FADECs 205-1 et 205-2 comprenant chacun deux canaux A et B sont utilisés, un FADEC étant associé à chaque moteur. L'ensemble des composants avioniques échangeant des données avec les FADECs a la référence 210. La référence 215 désigne l'unité d'interface moteur par laquelle transitent les données échangées entre les FADECs et les composants avioniques. Il convient de noter ici que toutes les données ne transitent pas seulement par l'unité d'interface moteur. En effet, il existe des besoins spécifiques de communication directe entre certains composants avioniques et les FADECs notamment pour des raisons de sûreté, par exemple en cas de défaillance de l'unité d'interface moteur ou du réseau de communication utilisé tel que le réseau AFDX (*Avionics Full Duplex Switched Ethernet* en terminologie anglo-saxonne).

La comparaison des figures 1 et 2 illustre les avantages procurés par l'invention dans la connectivité des FADECs et des composants avioniques, en particulier la simplification du câblage nécessaire entre les composants avioniques et les FADECs.

Les FADECs utilisés pour la mise en oeuvre de l'invention nécessitent des temps réduits de développement et de maintenance et, par conséquent, leur mise en oeuvre réduit les coûts de développement et de maintenance. En effet, l'avionneur est en mesure de développer, tester et configurer lui-même l'unité d'interface moteur, ce qui permet de limiter les échanges entre les avionneurs et les motoristes, réduisant ainsi les délais et les coûts de développement et de maintenance. De plus, un seul type d'unité d'interface moteur est nécessaire pour un aéronef, quelque soit le type de moteur monté sur cet aéronef. Le développement et la maintenance de l'unité d'interface moteur sont indépendants du développement et de la maintenance du contrôleur moteur.

Selon un mode de réalisation particulier, l'unité d'interface moteur est utilisée comme interface principale entre les FADECs et le système avionique. D'une part, l'unité d'interface moteur acquiert, sélectionne et consolide les nombreuses données issues du système avionique et transmet les données essentielles, sous forme synthétique, après les avoir validées. D'autre part, l'unité d'interface moteur consolide les données issues du ou des contrôleurs moteur et les transmet aux composants avioniques sans que les FADECs soient directement interfacés avec ces composants avioniques. De plus, l'unité d'interface moteur surveille les composants avioniques indépendamment des FADECs.

Selon un mode de réalisation particulier, les fonctions de l'unité d'interface moteur sont implémentées dans des calculateurs avioniques modulaires de type IMA, dans les modules CPIOMs existants (deux modules CPIOMs sont ici utilisés par moteur). Chaque contrôleur moteur est géré par une paire de modules CPIOMs, chacun des deux modules exécutant le même logiciel applicatif, c'est-à-dire chacun des deux modules mettant en oeuvre les fonctions de l'unité d'interface moteur, et transmettant les mêmes messages périodiques contenant des données validées issues du système avionique. Cette solution repose ainsi sur le concept d'applications miroirs.

Ce mode de réalisation offre notamment les avantages suivants,
- isolation des moteurs : les deux paires de modules CPIOMs n'échangent pas de données. Ainsi, l'obligation d'isolation des moteurs est respectée grâce à la capacité de ségrégation des réseaux de type AFDX ;
- gestion de panne de l'un des modules CPIOMs : en cas de panne de l'un des modules CPIOMs, les deux canaux redondants d'un FADEC reçoivent les données du module CPIOM restant ;
- gestion de panne du contrôleur moteur : l'architecture du contrôleur moteur étant similaire à celle utilisée dans l'art antérieur, c'est-à-dire une architecture à double canal, la gestion de panne du contrôleur moteur n'est pas affectée par l'invention ;
- gestion de panne de l'IMA : la perte du réseau AFDX est considérée comme une panne unique, similaire à la panne totale d'une paire de module CPIOM. En conséquence, toutes les fonctions de sécurité reposent avantageusement sur une solution de rechange utilisant un câblage spécifique entre le contrôleur moteur et l'aéronef. Le contrôleur moteur comprend, par exemple, un accès direct à la commande des gaz ;
- contrôle de l'intégrité des données de sécurité : si une analyse de sécurité l'exige, un double contrôle des données de sécurité peut être effectué par le contrôleur moteur. Le contrôleur moteur est un équipement DAL-A *(Development Assurance Level* en terminologie anglo-saxonne, il correspond au niveau d'exigence le plus élevé) basé sur une architecture à double canal, aussi simple que possible, conforme aux exigences de sécurité requises. De plus, la corruption de données à travers le réseau est détectée et éventuellement corrigée par l'utilisation d'une application utilisant un code correcteur de type somme de contrôle *(checksum* en terminologie anglo-saxonne) pour sécuriser les données transmises entre l'unité d'interface moteur et le contrôleur moteur ; et,
- programmation logicielle de la configuration moteur pour différencier les caractéristiques des moteurs : la plupart des fonctions de l'unité d'interface moteur sont identiques quels que soient les moteurs montés sur l'aéronef. Cependant, le contrôleur moteur peut indiquer à l'unité d'interface moteur le type de moteur utilisé pour permettre l'activation d'opérations particulières au sein de l'unité d'interface moteur.

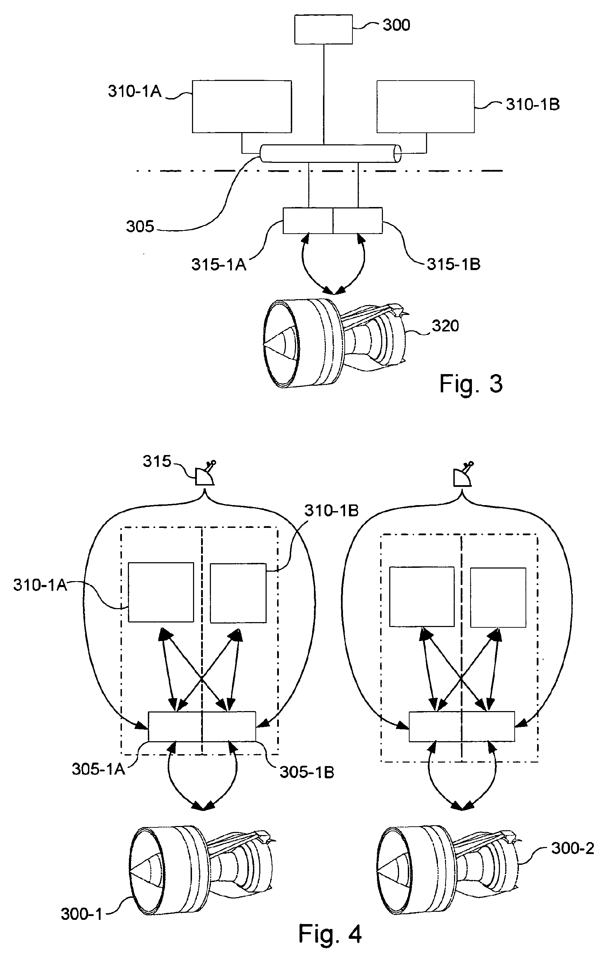

La figure 3 illustre un premier exemple d'architecture physique adaptée à mettre en oeuvre l'invention. Comme illustré, le système avionique 300 est relié au réseau AFDX 305 auquel sont également reliés l'unité d'interface moteur 310-1 comprenant les canaux A et B ainsi que le contrôleur moteur 315-1 comprenant les canaux A et B. Le contrôleur moteur 315-1 est associé au moteur 320.

Comme indiqué précédemment, les données échangées entre le contrôleur moteur 315-1 et le système avionique 300 sont transmises à travers l'unité d'interface moteur 310-1.

La figure 4 présente un exemple d'architecture logique adaptée à mettre en oeuvre l'invention dans laquelle un lien direct est établi entre les commandes de gaz et les contrôleurs moteur dans un aéronef comprenant deux moteurs. Comme illustré, le contrôle et la gestion des moteurs sont totalement indépendants pour chacun des deux moteurs 300-1 et 300-2. Il y a une ségrégation physique entre les systèmes associés à chacun des moteurs. Bien qu'une même connexion de type AFDX soit utilisée et relie les systèmes associés à chacun des moteurs, il a été montré que ce type de connexion garantit une ségrégation des données.

Le contrôleur moteur 305-1 comprenant les canaux A et B est associé au moteur 300-1. Chacun des canaux A et B du contrôleur moteur 305-1 est connecté à chaque canal de l'unité d'interface moteur 310-1. Ainsi, le canal A du contrôleur moteur 305-1 est relié au canal A de l'unité d'interface moteur 310-1 et au canal B de l'unité d'interface moteur 310-1. De même, le canal B du contrôleur moteur 305-1 est relié au canal A de l'unité d'interface moteur 310-1 et au canal B de l'unité d'interface moteur 310-1. Les canaux A et B des unités d'interface moteur sont également connectés au système avionique (non représenté).

De plus, une connexion directe est établie entre la commande de gaz 315 et chacun des canaux A et B du contrôleur moteur 305-1. Cette connexion directe permet un contrôle des gaz en cas de défaillance des deux canaux de l'unité d'interface moteur 310-1 et/ou des connexions établies entre les canaux de l'unité d'interface moteur 310-1 et les canaux du contrôleur moteur 305-1.

Comme illustré, l'architecture décrite par référence au moteur 300-1 est similaire à celle associée au moteur 300-2.

Bien que les systèmes d'alimentation électrique ne soient pas représentés, une ségrégation physique des alimentations électriques de chacun des moteurs est de préférence respectée.

Selon un mode de réalisation particulier, l'unité d'interface moteur est en charge de transmettre les données suivantes, issues du système avionique, aux contrôleurs moteur,
- les données liées à l'air extérieur, notamment la pression statique, la pression totale et la température, issues de trois sources différentes du système avionique, sélectionnées, consolidées et validées ;
- la position de la commande de gaz, consolidée et prenant en compte le système de commande de gaz ;
- la position des commutateurs de commande du cockpit liés aux moteurs, éventuellement validée ;
- les données de démarrage (à partir de la position validée des commutateurs de cockpit, les directives de démarrage sont transmises aux moteurs, par exemple démarrage automatique ou manuel avec ventilation humide ou sèche) ;
- les statuts de vol, notamment les statuts de vol déterminés par les systèmes de trains d'atterrissage ;
- l'indication de ralenti d'approche *(approach idle* en terminologie anglo-saxonne) ;
- l'information de remise des gaz ou de décollage ; et,
- le statut du prélèvement d'air.

Naturellement d'autres données peuvent être transmises telles que les modes de gestion des sources électriques.

Toujours selon un mode de réalisation particulier, les données suivantes sont transmises des contrôleurs moteur à l'unité d'interface moteur qui est en charge de les transmettre aux composants avioniques en ayant besoin,
- une information d'état du moteur indiquant si le moteur est arrêté ou non ;
- une indication de démarrage moteur ;
- une commande d'inhibition de l'anti-givrage durant la phase de décollage ;
- une indication de fuite de carburant (détectée entre le dispositif de mesure du flux de carburant et la chambre de combustion par comparaison des flux de carburant pour chaque moteur avec le carburant utilisé) ;
- une commande de dépressurisation de la pompe hydraulique (redémarrage du moteur en vol) ; et,
- des indications pour la surveillance des composants avioniques utilisant des données issues des moteurs.

De façon avantageuse, les données relatives aux inverseurs de poussée, notamment la position des inverseurs de poussée, sont également transmises des contrôleurs moteur à l'unité d'interface moteur qui est en charge de les transmettre aux composants avioniques en ayant besoin.

Naturellement, pour satisfaire des besoins spécifiques, une personne compétente dans le domaine de l'invention pourra appliquer des modifications dans la description précédente.

## Revendications

1. Dispositif pour aéronef motorisé comprenant au moins un composant avionique (210, 300) positionné dans ledit aéronef et au moins un contrôleur moteur (315-1A, 315-1B) positionné dans ou à proximité d'un moteur (320) dudit aéronef, ce dispositif comprenant en outre au moins une interface moteur (310-1A, 310-1B) positionnée dans ledit aéronef, ladite au moins une interface moteur (310-1A, 310-1B) étant adaptée à échanger des données entre ledit au moins un composant avionique (210, 300) et ledit au moins un contrôleur moteur (315-1A, 315-1B), **caractérisé en ce que** ladite au moins une interface moteur (310-1A, 310-1B) est générique et adaptée à communiquer avec des contrôleurs moteur de différents types pouvant être montés sur ledit aéronef, ledit au moins un contrôleur moteur (315-1A, 315-1B) étant spécifique à un type de moteur.

2. Dispositif selon la revendication précédente **caractérisé en ce que** ladite au moins une interface moteur (310-1A, 310-1B) comprend des moyens pour sélectionner lesdites données échangées entre ledit au moins un composant avionique (210, 300) et ledit au moins un contrôleur moteur (315-1A, 315-1B).

3. Dispositif selon la revendication précédente **caractérisé en ce que** ladite au moins une interface moteur (310-1A, 310-1B) comprend des moyens pour valider au moins certaines desdites données échangées entre ledit au moins un composant avionique (210, 300) et ledit au moins un contrôleur moteur (315-1A, 315-1B).

4. Dispositif selon l'une quelconque des revendications précédentes **caractérisé en ce que** ladite au moins une interface moteur (310-1A, 310-1B) est au moins partiellement implémentée dans un calculateur de type LRU.

5. Dispositif selon l'une quelconque des revendications précédentes **caractérisé en ce que** ladite au moins une interface moteur (310-1A, 310-1B) est au moins partiellement implémentée dans un calculateur avionique modulaire de type IMA.

6. Dispositif selon l'une quelconque des revendications précédentes **caractérisé en ce que** ladite au moins une interface moteur (310-1A, 310-1B) comprend au moins deux canaux redondants.

7. Dispositif selon l'une quelconque des revendications précédentes **caractérisé en ce que** ledit au moins un contrôleur moteur (315-1A, 315-1B) comprend au moins deux canaux redondants.

8. Dispositif selon l'une quelconque des revendications précédentes **caractérisé en ce que** ledit aéronef comprend au moins deux moteurs (300-1, 300-2), au moins une interface moteur (310-1A, 310-1B) et au moins un contrôleur moteur (305-1A, 305-1B) étant associés respectivement à chacun desdits au moins deux moteurs (300-1, 300-2), et **en ce qu'**il comprend en outre des moyens de ségrégation des données échangées dans chacun des systèmes formés d'au moins une interface moteur (310-1A, 310-1B) et d'au moins un contrôleur moteur (305-1A, 305-1B) associés à chacun desdits au moins deux moteurs (300-1, 300-2).

9. Dispositif selon l'une quelconque des revendications précédentes **caractérisé en ce qu'**il comprend en outre des moyens de connexion directe entre au moins un élément de commande (315) dudit aéronef et au moins un contrôleur moteur (305-1A, 305-1B).

## Claims

1. Device for an engine-operated aircraft comprising at least one avionic component (210, 300) positioned in the said aircraft and at least one engine control (315-1A, 315-1B) positioned in or close to an engine (320) of the said aircraft, this device further comprising at least one engine interface positioned in the said aircraft, the said at least one engine interface (310-1A, 310-1B) being adapted for exchanging data between the said at least one avionic component (210, 300) and the said at least one engine control (315-1A, 315-1B), **characterized in that** the said at least one engine interface (310-1A, 310-1B) is generic and adapted for communicating with engine controls of different types that can be mounted on the said aircraft, the said at least one engine control (315-1A, 315-1B) being specific to one type of engine.

2. Device according to the preceding claim, **characterized in that** the said at least one engine interface (310-1A, 310-1B) comprises means for selecting the said data exchanged between the said at least one avionic component (210, 300) and the said at least one engine control (315-1A, 315-1B).

3. Device according to the preceding claim, **characterized in that** the said at least one engine interface (310-1A, 310-1B) comprises means for validating at least some of the said data exchanged between the said at least one avionic component (210, 300) and the said at least one engine control (315-1A, 315-1B).

4. Device according to any one of the preceding claims, **characterized in that** the said at least one engine interface (310-1A, 310-1B) is at least partially implemented in a computer of LRU type.

5. Device according to any one of the preceding claims, **characterized in that** the said at least one engine interface (310-1A, 310-1B) is at least partially implemented in a modular avionic computer of IMA type.

6. Device according to any one of the preceding claims, **characterized in that** the said at least one engine interface (310-1A, 310-1B) comprises at least two redundant channels.

7. Device according to any one of the preceding claims, **characterized in that** the said at least one engine control (315-1A, 315-1B) comprises at least two redundant channels.

8. Device according to any one of the preceding claims, **characterized in that** the said aircraft comprises at least two engines (300-1, 300-2), at least one engine interface (310-1A, 310-1B) and at least one engine control (305-1A, 305-1B) being associated respectively with each of the said at least two engines (300-1, 300-2), and **in that** it further comprises means for segregation of the data exchanged in each of the systems made up of at least one engine interface (310-1A, 310-1B) and at least one engine control (305-1A, 305-1B) associated with each of the said at least two engines.

9. Device according to any one of the preceding claims, **characterized in that** it further comprises means for direct connection between at least one control element (315) of the said aircraft and at least one engine control (305-1A, 305-1B).

## Patentansprüche

1. Vorrichtung für ein motorisiertes Luftfahrzeug, das zumindest eine avionische Komponente (210, 300), die in dem Luftfahrzeug angeordnet ist, und zumindest einen Motorcontroller (315-1A, 315-1B) umfasst, der in oder in der Nähe eines Motors (320) des Luftfahrzeugs angeordnet ist, wobei die Vorrichtung außerdem zumindest eine Motorschnittstelle (310-1A, 310-1 B) umfasst, die in dem Luftfahrzeug angeordnet ist, wobei die zumindest eine Motorschnittstelle (310-1A, 310-1B) ausgebildet ist, um Daten zwischen der zumindest einen avionischen Komponente (210, 300) und dem zumindest einen Motorcontroller (315-1A, 315-1B) auszutauschen,
**dadurch gekennzeichnet, dass**
die zumindest eine Motorschnittstelle (310-1A, 310-1B) gattungsgemäß und ausgebildet ist, um mit den Motorcontrollern unterschiedlicher Typen, die an dem Luftfahrzeug montiert sein können, zu kommunizieren, wobei der zumindest eine Motorcontroller (315-1A, 315-1B) für einen Motortyp spezifisch ist.

2. Vorrichtung nach dem vorhergehenden Anspruch,
**dadurch gekennzeichnet, dass** die zumindest eine Motorschnittstelle (310-1A, 310-1B) Mittel umfasst, um die Daten auszuwählen, die zwischen der zumindest einen avionischen Komponente (210, 300) und dem zumindest einen Motorcontroller (315-1A, 315-1B) ausgetauscht werden.

3. Vorrichtung nach dem vorhergehenden Anspruch,
**dadurch gekennzeichnet, dass** die zumindest eine Motorschnittstelle (310-1A, 310-1B) Mittel umfasst, um zumindest bestimmte der Daten zu validieren, die zwischen der zumindest einen avionischen Komponente (210, 300) und dem zumindest einen Motorcontroller (315-1A, 315-1B) ausgetauscht werden.

4. Vorrichtung nach einem der vorhergehenden Ansprüche,
**dadurch gekennzeichnet, dass** die zumindest eine Motorschnittstelle (310-1A, 310-1B) zumindest teilweise in einem Rechner vom Typ LRU implementiert ist.

5. Vorrichtung nach einem der vorhergehenden Ansprüche,
**dadurch gekennzeichnet, dass** die zumindest eine Motorschnittstelle (310-1A, 310-1B) zumindest teilweise in einem modularen avionischen Rechner vom Typ IMA implementiert ist.

6. Vorrichtung nach einem der vorhergehenden Ansprüche,
**dadurch gekennzeichnet, dass** die zumindest eine Motorschnittstelle (310-1A, 310-1B) zumindest zwei redundante Kanäle umfasst.

7. Vorrichtung nach einem der vorhergehenden Ansprüche,
**dadurch gekennzeichnet, dass** der zumindest eine Motorcontroller (315-1A, 315-1B) zumindest zwei redundante Kanäle umfasst.

8. Vorrichtung nach einem der vorhergehenden Ansprüche,
**dadurch gekennzeichnet, dass** das Luftfahrzeug zumindest zwei Motoren (300-1, 300-2), zumindest eine Motorschnittstelle (310-1A, 310-1B) und zumindest einen Motorcontroller (305-1A, 305-1B) umfasst, die jeweils einem jeden der zumindest zwei Motoren (300-1, 300-2) zugeordnet sind, und dass sie zudem Trennungsmittel für Daten umfasst, die in jedem der Systeme ausgetauscht werden, die zumindest eine Motorschnittstelle (310-1A, 310-1B) und zumindest einen Motorcontroller (305-1A, 305-1B) bilden, die jedem der zumindest zwei Motoren (300-1, 300-2) zugeordnet sind.

9. Vorrichtung nach einem der vorhergehenden Ansprüche,
**dadurch gekennzeichnet, dass** sie außerdem direkte Verbindungsmittel zwischen zumindest einem Steuerelement (315) des Luftfahrzeugs und zumindest einem Motorcontroller (305-1A, 305-1B) umfasst.
